# NEW EUROPEAN PATENT SPECIFICATION

(11) **EP 1 108 900 B2**
(45) Date of publication and mention of the opposition decision: **23.03.2011**
(45) Mention of the grant of the patent: 17.12.2003
(21) Application number: 01106856.6
(22) Date of filing: 18.07.1995
(51) Int. Cl.: F16B 31/04, B25B 21/00

(54) **Fluid operated tool for elongating and relaxing a threaded connector**
Druckmittel betätigtes Werkzeug zur Änderung der Länge einer Schraubverbindung
Outil actionné par fluide pour allonger ou comprimer un raccord fileté

(43) Date of publication of application: 20.06.2001
(62) Divisional of application: 95304999.6
(73) Proprietor: Junkers, John K., Saddle River, New Jersey 07458 (US)
(72) Inventor: Junkers, John K., Saddle River, New Jersey 07458 (US)
(74) Representative: Hanson, William Bennett

(56) References cited:
- EP-A- 0 193 097
- EP-A- 0 498 681
- EP-B1- 0 593 742
- WO-A1-93/22568
- DE-A1- 1 902 413
- US-A- 2 789 597
- US-A- 2 882 773
- US-A- 3 247 741
- US-A- 3 323 394
- US-A- 3 323 395
- US-A- 3 581 383
- US-A- 3 584 527
- US-A- 4 201 099
- US-A- 4 289 049
- US-A- 4 289 049
- US-A- 4 336 727
- US-A- 4 368 655
- US-A- 5 140 874
- US-A- 5 140 874
- US-A- 5 318 397
- US-A- 5 341 560
- US-A- 5 341 560

## Description

This invention relate to fluid operated tools, particularly for elongating and relaxing of threaded connectors.

There are many different known fluid operated wrenches. Some fluid operated wrenches include a hydraulic drive, a driving part which engages a threaded connector and is driven by the drive so that, by actuating the drive, the driving part turns the threaded connector, and a reaction part adapted to counteract a force created during turning of the threaded connector. The reason for the provision of the reaction part is that, during turning of the. threaded connector, a force is created tending to turn the tool in the opposite direction. It is necessary to counteract this force, which has been achieved in existing tools by the corresponding reaction part. In known fluid operated tools, such as for example the fluid operated tools disclosed in my US patent specifications US-A-4,201,099, US-A-4,336,727, US-A-4,368,655 and others, the reaction part is formed as an abutment element which is provided on the housing and adapted to abut against a stationary object located near the threaded connector to be tightened or loosened. While such a reaction part provides an efficient counteraction to the force tending to turn the tool in the opposite direction, it has some disadvantages. On the one hand it is always necessary to have a neighbouring object for the reaction part to abut against. On the other hand, the abutment against a neighbouring object has always been performed in these constructions in such a way that some of the parts which transmit the movement of the hydraulic drive to the driving part and also some of the parts in the driving part are subjected to forces which can break these parts. It is therefore clear that further modifications and improvements of such fluid operated tools are desirable. In US-A-5,341,560 there is disclosed a method of elongating and relaxing a stud although there is no disclosure of how tools are constructed for the application of action and reaction forces.

Accordingly, it is an object of the present invention to provide a fluid operated tool which avoids the disadvantages of the prior art.

In keeping with these objects and with others which will become apparent hereinafter, one feature of the present invention resides in a fluid operated tool of the type disclosed in US-A-5 341 560 and as claimed in the ensuing claim 1.

When the fluid operated tool is designed in accordance with the present invention it eliminates the disadvantages of the prior art and provides for the above-mentioned highly advantageous results.

An embodiment of the invention will now be described, by way of example only, with particular reference to the accompanying drawings, in which:
Figure 1 is a side view of a fluid operated tool in accordance with the present invention; and
Figure 2 is a plan of the fluid operated tool shown in Figure 1.

A fluid operated tool in accordance with the present invention is used for elongating and relaxing a threaded connector, such as for example a threaded stud 1. The fluid operated tool has a housing 2 which accommodates fluid operated drive means which conventionally includes a cylinder 4, a piston 5 reciprocatable in the cylinder under the action of a working fluid medium, a piston rod 6 extending outwardly beyond the cylinder 4 and pivotally connected with at least one driving plate 7 for turning the latter.

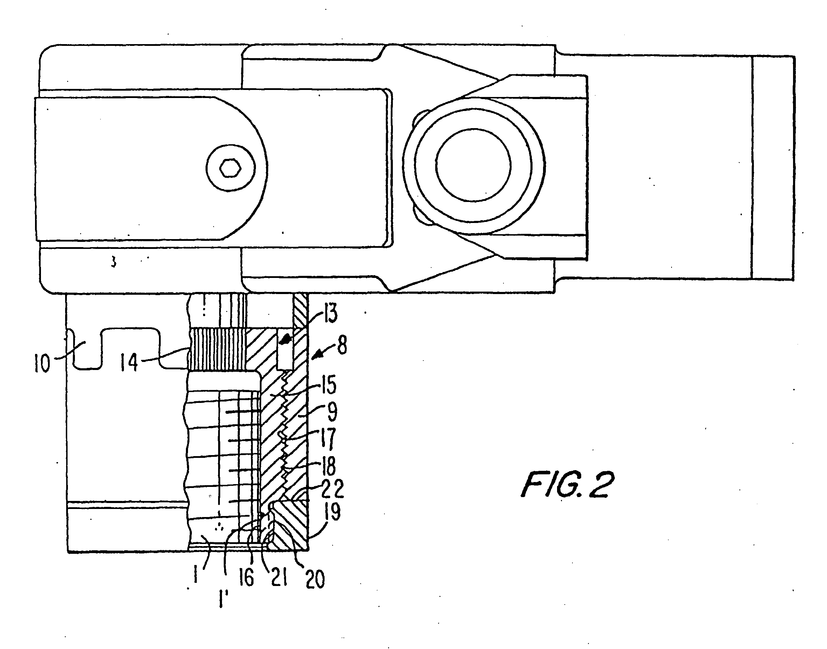

The fluid operated tool shown in the drawings 1 further has a non-rotatable or reaction part 13. The reaction part 13 includes a non-rotatable projection 14 which, for example, is non-rotatably mounted on the housing 2 of the tool and has outer splines, and an inner, non-rotatable, sleeve 15 having an upper portion (see Figure 2) provided with inner splines engaging with the outer splines of the projection 14. The inner sleeve 15 has an inner surface provided with first engaging means 16 formed, for example, as a screw thread engaging with an outer screw thread 1' of the stud 1.

The fluid operated tool further has a driving part which includes a rotatable tool element 8. The rotatable tool element 8 can be formed as an outer sleeve 9 connected (as shown in Figure 2 by interengaging castellations) with a coaxial projection 10 of a ratchet wheel 11 which is intermittently turnable by a pawl 12 pivotally mounted on the driving plate 7. The outer sleeve 9 has an inner surface provided with second engaging means 17 formed, for example, as a screw thread engageable with third engaging means 18 formed, for example, as a matching screw thread on the outer surface of the inner sleeve 15. The screw threads 1', 16 and 17, 18 have opposite directions.

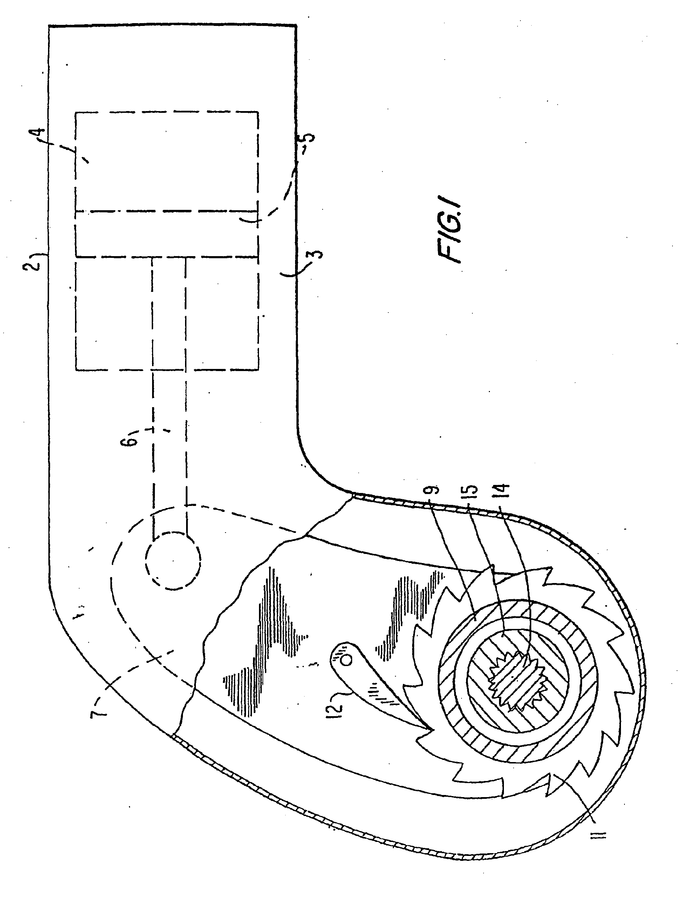

The fluid operated tool further has an intermediate element 19 formed as a ring provided, for example, with inner splines 20 which engage with outer splines 21 of a lower axial portion of the inner sleeve 15. As can be seen from the Figures 1 and 2, the inner sleeve 15 has five surfaces cooperating with other parts of the tool and which are subject to friction, these surfaces of the sleeve 15 being the surface of its inner thread 16, the surface of its outer thread 18, the surface of its splines 21, the surface of its splines cooperating with the non-rotatable projection 14 and the lower end surface abutting against a flange (not shown) in which the stud 1 is screwed. In contrast, the outer sleeve 8 has only three surfaces which are subject to friction, namely the surface of its inner thread 17, the surfaces cooperating with the projection 10, and the lower end surface which is in free contact with an upper end surface 22 of the intermediate element 19.

During operation of a fluid operated tool applied on the stud 1, the inner sleeve 15 engages with the stud 1 but it cannot rotate since it is connected with the non-rotatable projection 14 of the housing 2. Rotation of the stud is thus prevented. Under the action of the fluid operated drive, the pawl 12 turns the ratchet 11 which in turn, through its projection 10, turns the outer sleeve 9. The outer sleeve 9, with its lower end surface abutting against the end surface 22 of the intermediate element 19, freely turns relative to the element 19. The inner sleeve 15 is held non-rotatably by the projection 14 and is displaced, only axially, in response to turning of the outer sleeve 9 and, as a result, it axially displaces the stud 1 for elongating or relaxing the stud 1, depending on the direction of action of the fluid operated drive.

## Claims

1. A tool for elongating and relaxing a threaded connector, comprising a non-rotatable tool element (15), provided with first engaging means (16) for non-rotatably engaging a threaded connector (1); a rotatable tool element (9) coaxial with the non-rotatable tool element (15), rotatable about an axis of the threaded connector (1) and having second engaging means (17) for engaging said non-rotatable tool element (15); and an intermediate element (19) arranged and formed so that it engages with, but is non-rotatable relative to, said non-rotatable tool element (15); the rotatable tool element (9) being freely turnable relative to the intermediate element (19) whereby, when said rotatable tool element (9) is turned about said axis, the non-rotatable tool element (15) only moves in an axial direction, but does not turn, and therefore is able to displace in an axial direction a threaded connector (1) when it is engaged with the latter; **characterised in that** the tool is a fluid operated ratcheting torque tool and further comprises a housing (2); a fluid drive (4-7); a rotatable annular projection (10) which is rotatable by said fluid drive (4-7) and which is connected with said rotatable tool element (9) to rotate the latter; and a non-rotatable projection (14) radially surrounded by said annular projection (10), whereby the non-rotatable projection (14) is not rotatable relative to said housing (2), and is connected with said non-rotatable tool element so as to prevent rotation of said non-rotatable tool element (15); and **in that** said rotatable and non-rotatable projections (10 and 14) and said rotatable and non-rotatable tool elements (9, 15) are coaxial with each other.

2. A fluid operated tool according to claim 1, **characterised in that** said non-rotatable tool element (15) is formed as an inner sleeve (15) having an inner surface provided with said first engaging means (16) for engaging an outer surface (1') of the threaded connector (1) and an outer surface provided with a third engaging means (18), and **in that** said rotatable tool element (9) is formed as an outer sleeve (9) having an inner surface provided with said second engaging means (17) which engage the said third engaging means (18).

3. A fluid operated tool according to claim 2, **characterised in that** said intermediate element (19) is formed as a ring having an end surface (22) and an inner surface provided with fourth engaging means (20) which engage said outer surface of said inner sleeve, and **in that** said outer sleeve (9) has another end surface which is in contact with said end surface (22) of said intermediate element (19) during the free turning of said outer sleeve relative to said intermediate element (19).

4. A fluid operated tool according to claim 2 or 3, **characterised in that** said inner sleeve (15) has more surfaces cooperating with other parts of the tool, whilst said outer sleeve has less surfaces cooperating with other parts of the tool.

5. A fluid operated tool according to claim 2, 3 or 4, **characterised in that** said inner sleeve is non-rotatably connected with said non-rotatable projection (14) of said housing radially inwardly of said inner sleeve and said outer sleeve.

6. A fluid operated tool according to any one of the preceding claims, **characterised in that** said rotatable projection (10) is annular and **in that** said non-rotatable projection (14) is located in the centre of said rotatable projection (10) and is surrounded by the latter.

7. A fluid operated tool according to any one of the preceding claims, **characterised in that** said rotatable projection (10) is connected with said rotatable tool element (9) in an axial region in which said non-rotatable projection (14) is connected with said non-rotatable tool element (15).

## Patentansprüche

1. Werkzeug zum Dehnen und Entspannen eines Gewindeverbinders, mit einem nichtdrehbaren Werkzeugelement (15), das mit ersten Eingriffsmitteln (16) zum nichtdrehbaren Eingriff eines Gewindeverbinders (1) versehen ist; einem zu dem nichtdrehbaren Werkzeugelement (15) koaxialen drehbaren Werkzeugelement (9), das um eine Achse des Gewindeverbinders (1) drehbar ist und zweite Eingriffsmittel (17) zum Eingriff des nichtdrehbaren Werkzeugelements (15) aufweist; und einem Zwischenelement (19), das so angeordnet und ausgebildet ist, dass es das nichtdrehbare Werkzeugelement (15) in Eingriff nimmt, aber bezüglich diesem nicht drehbar ist; wobei das drehbare Werkzeugelement (9) bezüglich des Zwischenelements (19) frei drehbar ist, wodurch sich bei Drehung des drehbaren Werkzeugelements (9) um die Achse das nichtdrehbare Werkzeugelement(15) nur in einer axialen Richtung bewegt, sich aber nicht dreht, und deshalb einen Gewindeverbinder (1) in die axiale Richtung verschieben kann, wenn es mit Letzterem in Eingriff steht; **dadurch gekennzeichnet, dass** das Werkzeug ein druckmittelbetätiges Ratschendrehmomentwerkzeug ist und weiterhin Folgendes umfasst: ein Gehäuse(2); einen Fluidantrieb (4-7); einen drehbaren Vorsprung (10), der durch den Fluidantrieb (4-7) gedreht werden kann und so mit dem drehbaren Werkzeugelement (9) verbunden ist, dass er Letzteres drehen kann; und einen nichtdrehbaren Vorsprung (14), der von dem ringförmigen Vorsprung (10) radial umgeben ist, wodurch der nichtdrehbare Vorsprung (14) bezüglich des Gehauses (2) nicht drehbar ist, und der mit dem nichtdrehbaren Werkzeugelement verbunden ist, so dass eine Drehung des nichtdrehbaren Werkzeugelements (15) verhindert wird; und dass der drehbare und der nichtdrehbare Vorsprung (10 und 14) und das drehbare und das nichtdrehbare Werkzeugelement (9,15) koaxial zueinander sind.

2. Druckmittelbetätigtes Werkzeug nach Anspruch 1, **dadurch gekennzeichnet, dass** das nichtdrehbare Werkzeugelement (15) als eine innere Hülse (15) ausgebildet ist, die eine Innenfläche, die mit den ersten Eingriffsmitteln (16) zur Ineingriffnahme einer Außenfläche (1') des Gewindeverbinders (1) versehen ist, und eine Außenfläche, die mit dritten Eingriffsmitteln (18) versehen ist, aufweist, und dass das drehbare Werkzeugelement (9) als eine äußere Hülse (9) ausgebildet ist, die eine Innenflache aufweist, die mit den zweiten Eingriffsmitteln (17) versehen ist, die die dritten Eingriffsmittel (18) in Eingriff nehmen.

3. Druckmittelbetätigtes Werkzeug nach Anspruch 2, **dadurch gekennzeichnet, dass** das Zwischenelement (19) als ein Ring mit einer Endflache (22) und einer Innenfläche ausgebildet ist, die mit vierten Eingriffsmitteln (20) versehen ist, die die Außenfläche der inneren Hülse in Eingriff nehmen, und dass die äußere Hülse (9) eine andere Endfläche aufweist, die mit der Endfläche (22) des Zwischenelements (19) wahrend des freien Drehens der äußeren Hülse bezüglich des Zwischenelements (19) in Berührung steht.

4. Druckmittelbetätigtes Werkzeug nach Anspruch 2 oder 3, **dadurch gekennzeichnet, dass** die innere Hülse (15) mehr Flächen aufweist, die mit anderen Teilen des Werkzeugs zusammenwirken, wahrend die äußere Hülse weniger Flächen aufweist, die mit anderen Teilen des Werkzeugs zusammenwirken.

5. Druckmittelbetätigtes Werkzeug nach Anspruch 2, 3 oder 4, **dadurch gekennzeichnet, dass** die innere Hülse mit dem nichtdrehbaren Vorsprung (14) des Gehäuses radial innerhalb der inneren Hülse und der äußeren Hülse nichtdrehbar verbunden ist.

6. Druckmittelbetätigtes Werkzeug nach einem der vorhergehenden Ansprüche, **dadurch gekennzeichnet, dass** der drehbare Vorsprung (10) ringförmig ist und dass sich der nichtdrehbare Vorsprung (14) in der Mitte des drehbaren Vorsprungs (10) befindet und von diesem umgeben ist.

7. Druckmittelbetätigtes Werkzeug nach einem der vorhergehenden Ansprüche, **dadurch gekennzeichnet, dass** der drehbare Vorsprung (10) mit dem drehbaren Werkzeugelement (9) in einem axialen Bereich verbunden ist, in dem der nichtdrehbare Vorsprung (14) mit dem nicht drehbaren Werkzeugelement (15) verbunden ist.

## Revendications

1. Outil pour allonger et relâcher un connecteur fileté, comprenant un élément d'outil non rotatif (15) pourvu d'un premier moyen d'engagement (16) pour s'engager de façon non rotative sur un connecteur fileté (1); un élément d'outil rotatif (9) coaxial à l'élément d'outil non rotatif (15), pouvant effectuer une rotation autour d'un axe du connecteur fileté (1) et comportant un deuxième moyen d'engagement (17) pour pouvoir s'engager sur ledit élément d'outil non rotatif (15); et un élément intermédiaire (19) agencé et formé de manière à s'engager sur ledit élément d'outil non rotatif (15) mais non rotatif par rapport à celui-ci; l'élément d'outil rotatif (9) pouvant tourner librement par rapport a l'élément intermédiaire (19) ce par quoi, quand ledit élément d'outil rotatif (9) tourne autour dudit axe, l'élément d'outil non rotatif (15) se déplace seulement dans une direction axiale, mais ne tourne pas, et est par conséquent capable de déplacer dans la direction axiale un connecteur fileté (1) quand il est engagé sur ce dernier; **caractérisé en ce que** l'outil est un outil de couple à rochet, commandé par un fluide, at comprend en outre un logement (2); un entraînement par fluide (4-7); une saillie annulaire rotative (10) dont la rotation est commandée par ledit entraînement par fluide (4-7) et qui est connectée audit element d'outil rotatif (9) pour causer la rotation de ce dernier; et une saillie non rotative (14) entourée dans le sens radial par ladite saillie annulaire (10), ce par quoi la saillie non rotative (14) ne tourne pas par rapport audit logement (2), et est connectée audit élément d'outil non rotatif de manière à empêcher la rotation dudit élément d'outil non rotatif (15); et **en ce que** lesdites saillies rotative et non rotative (10 et 14) et lesdits éléments d'outil rotatif et non rotatif (9, 15) sont coaxiaux l'un par rapport a l'autre.

2. Outil commandé par fluide selon la revendication 1, **caractérisé en ce que** ledit élément d'outil non rotatif (15) est sous la forme d'un manchon intérieur (15) ayant une surface intérieure pourvue dudit premier moyen d'engagement (16) pour s'engager sur une surface extérieure (1') du connecteur fileté (1) et une surface extérieure pourvue d'un troisième moyen d'engagement (18), et **en ce que** ledit élément d'outil rotatif (9) est sous la forme d'un manchon extérieur (9) ayant une surface intérieure pourvue dudit deuxième moyen d'engagement (17) qui s'engage sur ledit troisième moyen d'engagement (18).

3. Outil commandé par fluide selon la revendication 2, **caractérisé en ce que** ledit élément intermédiaire (19) est sous la forme d'une bague ayant une surface d'extrémité (22) et une surface intérieure pourvue d'un quatrième moyen d'engagement (20) qui s'engage sur ladite surface extérieure dudit manchon intérieur, et **en ce que** ledit manchon extérieur (9) a une autre surface d'extrémité qui est en contact avec ladite surface d'extrémité (22) dudit élément intermédiaire (19) durant la rotation libre dudit manchon extérieur par rapport audit élément intermediaire (19).

4. Outil commandé par fluide selon la revendication 2 ou 3, **caractérisé en ce que** ledit manchon intérieur (15) a davantage de surfaces coopérant avec d'autres parties de l'outil, tandis que ledit manchon extérieur a moins de surfaces coopérant avec d'autres parties de l'outil.

5. Outil commandé par fluide selon la revendication 2, 3 ou 4, **caractérisé en ce que** ledit manchon intérieur est connecté de manière non rotative à ladite saillie non rotative (14) dudit logement, radialement, en retrait dudit manchon intérieur et dudit manchon extérieur.

6. Outil commandé par fluide selon l'une quelconque des revendications précédentes, **caractérisé en ce que** ladite saillie rotative (10) est annulaire et **en ce que** ladite saillie non rotative (14) est située au centre de ladite saillie rotative (10) et est entourée par cette dernière.

7. Outil commandé par fluide selon l'une quelconque des revendications precedentes, **caractérisé en ce que** ladite saillie rotative (10) est connectée audit élément d'outil rotatif (9) dans une région axiale dans laquelle ladite saillie non rotative (14) est connectée audit élément d'outil non rotatif (15).
